# EUROPÄISCHE PATENTSCHRIFT

(11) **EP 3 175 040 B1**
(45) Veröffentlichungstag und Bekanntmachung des Hinweises auf die Patenterteilung: **27.03.2019**
(21) Anmeldenummer: 15756820.5
(22) Anmeldetag: 28.07.2015
(51) Int. Cl.: E01B 31/13

(54) **SCHIENENFAHRZEUG MIT EINER VORRICHTUNG ZUM NACHBEARBEITEN DER LAUFFLÄCHE VON GLEISSCHIENEN**
RAIL VEHICLE HAVING A DEVICE FOR FINISHING THE RUNNING SURFACE OF TRACK RAILS
VÉHICULE FERROVIAIRE COMPORTANT UN DISPOSITIF DE POST-TRAITEMENT DE LA SURFACE DE ROULEMENT DES VOIES FERRÉES

(30) Priorität: 29.07.2014 AT 505322014
(43) Veröffentlichungstag der Anmeldung: 07.06.2017
(73) Patentinhaber: Maschinenfabrik Liezen und Gießerei Ges.m.b.H., 8940 Liezen (AT)
(72) Erfinder: RUNGGER, Helmut, 4661 Roitham (AT)
(74) Vertreter: Patentanwaltskanzlei Hübscher
(86) Internationale Anmeldenummer: PCT/AT2015/050184
(87) Internationale Veröffentlichungsnummer: WO 2016/015078

(56) Entgegenhaltungen:
- EP-A1- 0 668 398
- CH-A5- 672 338
- GB-A- 2 121 710

## Beschreibung

### Technisches Gebiet

Die Erfindung bezieht sich auf ein Schienenfahrzeug mit einer Fräsvorrichtung zum Nachbearbeiten der Lauffläche von Gleisschienen während der Fahrt des einen Fahrgestellrahmen mit Radsätzen aufweisenden Schienenfahrzeugs entlang der Gleisschienen, wobei die mit einem Fräskopf versehene Fräsvorrichtung ein am Fahrgestellrahmen angeordnetes Gestell mit einer der Höhe nach und quer dazu verlagerbaren Fräskopfaufnahme umfasst, die zur Höhenführung über einen Führungsschuh auf der Lauffläche der Gleisschienen und zur Querführung parallel zur Fräskopfwelle der Fräsvorrichtung über einen Führungsanschlag seitlich am Schienenkopf der Gleisschienen abstützbar ist.

### Stand der Technik

Um bei Schienenfahrzeugen zum Nachbearbeiten der Lauffläche der Gleisschienen nicht einen nach oben auskragenden Fahrgestellrahmen zum Unterbringen der hierfür eingesetzten Fräsvorrichtung unterhalb des Fahrgestellrahmens vorsehen zu müssen, ist es bekannt, den Fahrgestellrahmen mit einer Durchtrittsöffnung für die Fräsvorrichtung zu versehen, wobei die Fräskopfwelle oberhalb des Fahrgestellrahmens verläuft und in einem Vertikalschlitten gelagert ist, der in einem Querschlitten geführt wird, sodass der Fräskopf über vor- und nachgelagerte, mit Spurkränzen versehene Stützrollen während der Befahrung der Gleisschienen entlang deren Laufflächen als Kulissenführung bearbeitungsgerecht geführt werden kann. Wegen der Durchtrittsöffnung im Fahrgestellrahmen des Schienenfahrzeugs und der Anordnung der Fräskopfwelle oberhalb des Fahrgestellrahmens ergeben sich keine Schwierigkeiten hinsichtlich der Bauhöhe der Fräsvorrichtung und der Anordnung des aus dem Vertikal- und dem Querschlitten zusammengesetzten Kreuzschlittens innerhalb des Schienenfahrzeugs. Nachteilig ist allerdings, dass das Schienenfahrzeug einer Sonderkonstruktion des Fahrgestellrahmens bedarf und dass der sich aus der vorgeschlagenen Konstruktion zwangsläufig ergebende, vergleichsweise große Durchmesser des Fräskopfs entsprechend große Achsabstände zwischen den der Fräsvorrichtung vor- und nachgelagerten Radsätzen des Schienenfahrzeugs bedingt, was das Bearbeiten von Gleisschienen mit kleinen Kurvenradien, wie sie beispielsweise bei U-Bahnen vorkommen, erheblich erschwert.

Ähnliche Nachteile ergeben sich bei einer anderen bekannten Fräsvorrichtung (WO 2013/086547 A1), bei der der Fräskopf mit Hilfe eines in Fahrrichtung vorgelagerten Kreuzschlittens verstellbar ist, der aus einem Querschlitten und einem auf dem Querschlitten geführten, eine Fräskopfaufnahme bildenden Höhenschlitten zusammengesetzt ist, der einen Führungsschuh im Zwickelbereich zwischen der Gleisschiene und dem Fräskopf trägt. Der den Fahrgestellrahmen des Schienenfahrzeugs durchsetzende Fräskopf wird über einen gesonderten Stelltrieb angestellt, der über eine beispielsweise durch den Gleitschuh als Messfühler gebildete Messeinrichtung angesteuert wird, um die Nachteile zu vermeiden, die sich aus dem konstruktionsbedingten Abstand des Fräskopfs von der Führungsbahn des Querschlittens des Kreuzschlittens ergeben.

Die EP-A-668398 offenbart ebenfalls ein Schienenfahrzeug mit einer Fräsvorrichtung zum Nachbearbeiten der Lauffläche von Gleisschienen gemäß dem Oberbegriff des Anspruchs 1.

### Darstellung der Erfindung

Der Erfindung liegt somit die Aufgabe zugrunde, ein Schienenfahrzeug mit einer Vorrichtung zum Nachbearbeiten der Lauffläche der Gleisschienen so auszubilden, dass Sonderkonstruktionen für den Fahrgestellrahmen entfallen und vorteilhafte Voraussetzungen für die Bearbeitung von Gleisschienen mit vergleichsweise kleinen Kurvenradien geschaffen werden.
Ausgehend von einem Schienenfahrzeug der eingangs geschilderten Art löst die Erfindung die gestellte Aufgabe dadurch, dass die Fräskopfaufnahme einen den Führungsschuh und den Führungsanschlag tragenden Querschlitten bildet, dessen der Höhe nach am Gestell verlagerbare Führungsbahn auf der dem Führungsschuh zugekehrten Seite der Fräskopfaufnahme vorgesehen ist, und dass der Durchmesser des Fräskopfs höchstens der Hälfte des Raddurchmessers der Radsätze entspricht.

Da dem die Fräskopfaufnahme bildenden Querschlitten eine seitliche Führungsbahn zugeordnet ist, wird die Bauhöhe der Fräsvorrichtung durch die Führung des Querschlittens nicht vergrößert, was eine wesentliche Voraussetzung für die Anordnung der Fräsvorrichtung unterhalb des Fahrgestellrahmens darstellt, ohne den Fahrgestellrahmen nach oben auskröpfen oder mit einer Durchtrittsöffnung für die Fräsvorrichtung versehen zu müssen. Bei einem Durchmesser des Fräskopfs kleiner als die Hälfte des Raddurchmessers der Radsätze des Schienenfahrzeugs wird es somit möglich, die Fräsvorrichtung unter Wahrung eines ausreichenden Stellwegs der Höhe nach auf der Unterseite des Fahrgestellrahmens vorzusehen, ohne den Fahrgestellrahmen ändern zu müssen. Die befürchteten Nachteile von Fräsköpfen mit kleinerem Durchmesser hinsichtlich der Welligkeit der bearbeiteten Lauffläche können durch eine Verringerung des Abstands der Fräsmesser in Umfangsrichtung und eine Vergrößerung der Fräskopfumdrehungen mehr als ausgeglichen werden. Abgesehen davon, dass Schienenfahrzeuge mit herkömmlichen Fahrgestellrahmen für den Einsatz erfindungsgemäßer Fräsvorrichtungen verwendet werden können, verringert sich das Gewicht der Fräsköpfe mit kleiner werdendem Durchmesser überproportional, sodass ein einfacher Wechsel des gesamten Fräskopfs durch ein axiales Abziehen von der Fräskopfwelle von Hand aus möglich wird. Der kleinere Fräskopfdurchmesser erlaubt außerdem eine Verringerung des Abstands des dem Fräskopf in Fahrrichtung vorgelagerten, auf der Lauffläche der Gleisschiene abgestützten Führungsschuhs vom Eingriffsbereich des Fräskopfs, wodurch die Führungsgenauigkeit des Fräskopfs erhöht wird. Dazu kommt, dass der Führungsschuh auf der Seite der Führungsbahn für den Querschlitten vorgesehen ist, was eine kompakte Bauweise mit einer vergleichsweise geringen Erstreckung in Fahrrichtung ermöglicht.

Die erfindungsgemäße Ausbildung der Fräskopfaufnahme als Querschlitten stellt außerdem eine vorteilhafte Voraussetzung für eine Anordnung des Führungsschuhs unterhalb der Führungsbahn für den Querschlitten dar, sodass zur Höhenführung des Fräskopfs kein gesonderter Stelltrieb erforderlich ist und lediglich der Querschlitten über den Führungsschuh an die Lauffläche der Gleisschiene angedrückt gehalten werden muss. Zur Einstellung der Schnitttiefe bzw. der Spandicke braucht ja nur der Höhenabstand zwischen dem Fräskopf und dem Führungsschuh eingestellt zu werden, beispielsweise durch eine entsprechende Verlagerung des Führungsschuhs. Mit der Anordnung des Führungsschuhs unterhalb der Führungsbahn für den Querschlitten ergibt sich außerdem eine günstige Krafteinleitung vom Querschlitten in seine Führungsbahn, was einer leichten Bauweise zugutekommt.

Um eine möglichst geringe Bauhöhe für die Fräsvorrichtung sicherstellen zu können, kann der für den Fräskopfantrieb vorgesehene Motor auf der der Führungsbahn für den Querschlitten gegenüberliegenden Seite der Fräskopfaufnahme vorgesehen werden.

Die Höhenführung für die Fräskopfaufnahme könnte auf der dem Fräskopf gegenüberliegenden Stirnseite der Fräskopfaufnahme vorgesehen werden. Einfachere Konstruktionsverhältnisse ergeben sich jedoch, wenn diese Höhenführung für die Fräskopfaufnahme auf der Seite der Führungsbahn für den Querschlitten vorgesehen ist, also dem die Fräskopfaufnahme bildenden Querschlitten in Fahrrichtung vorgelagert wird.

Die Höhenführung für die Fräskopfaufnahme kann unterschiedlich konstruktiv gestaltet werden. Eine einfache Möglichkeit besteht darin, zur Höhenführung des Querschlittens einen im Gestell der Höhe nach verschiebbar gelagerten Anstellschlitten vorzusehen. Anstelle eines solchen Anstellschlittens kann der Querschlitten zur Höhenführung aber auch über ein Gelenkparallelogramm am Gestell angelenkt sein. Die mit der Höhenverstellung des Querschlittens über ein Gelenkparallelogramm verbundene Bewegungskomponente in Schienenlängsrichtung ist klein und spielt für die Bearbeitung der Lauffläche der Gleisschienen keine Rolle.

Da der die Fräskopfaufnahme bildende Querschlitten aufgrund seiner seitlichen Führungsbahn auf der Ober- und Unterseite frei bleibt, kann der Führungsanschlag zur Querführung der Fräskopfaufnahme in vorteilhafter Art unterhalb des Fräskopfs an den Schienenkopf angelegt werden, Was hinsichtlich der Querführung des Fräskopfs besonders vorteilhafte Konstruktionsvoraussetzungen schafft.

### Kurze Beschreibung der Zeichnungen

In der Zeichnung ist der Erfindungsgegenstand beispielsweise dargestellt. Es zeigen
- Fig. 1: ein erfindungsgemäßes Schienenfahrzeug mit einer Fräsvorrichtung zum Nachbearbeiten der Lauffläche von Gleisschienen ausschnittsweise in einer schematischen Seitenansicht,
- Fig. 2: eine Seitenansicht der Fräsvorrichtung in einem größeren Maßstab,
- Fig. 3: einen Schnitt nach der Linie III-III der Fig. 2,
- Fig. 4: eine der Fig. 2 entsprechende Darstellung einer Ausführungsvariante einer erfindungsgemäßen Fräsvorrichtung und
- Fig. 5: einen Schnitt nach der Linie V-V der Fig. 4.

### Weg zur Ausführung der Erfindung

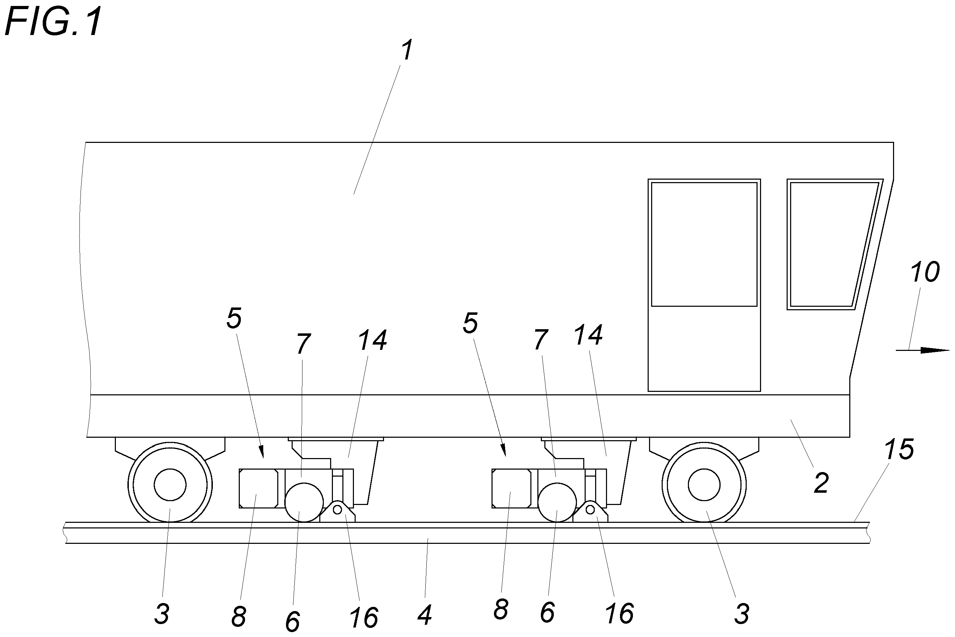

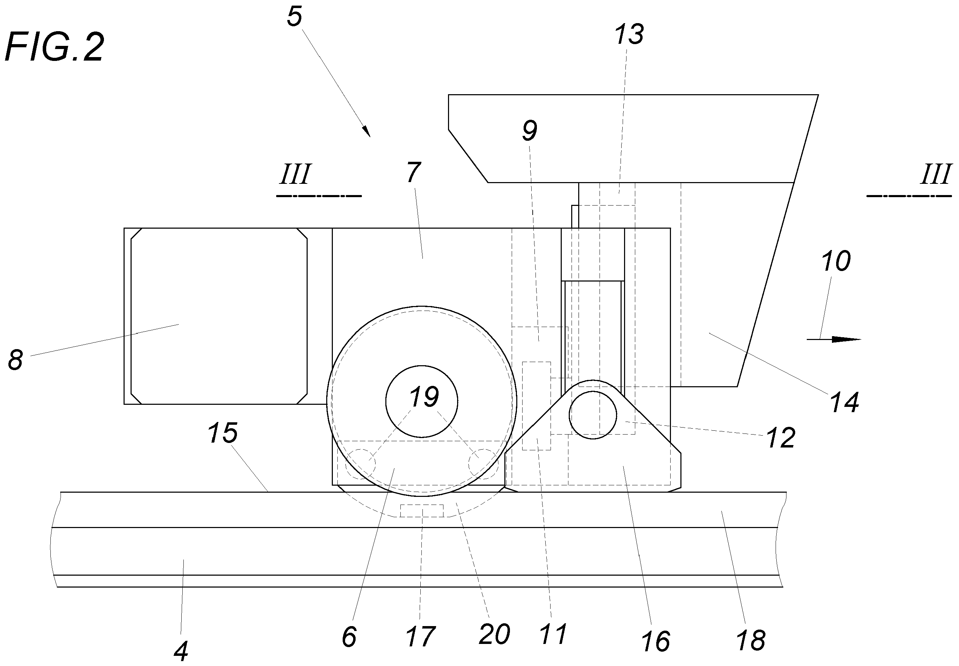

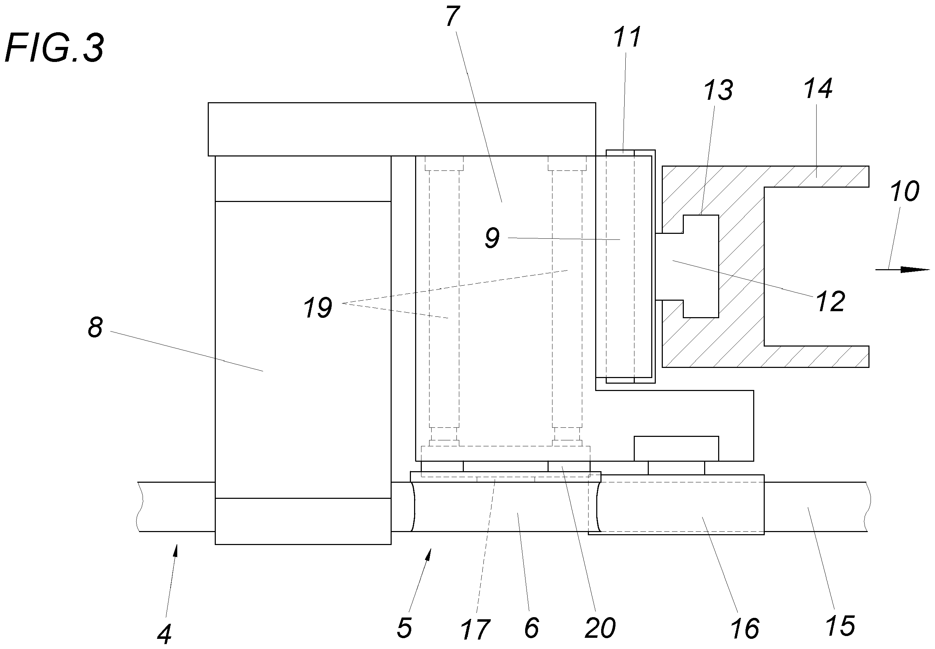

Das Schienenfahrzeug 1 weist gemäß der Fig. 1 einen Fahrgestellrahmen 2 mit Radsätzen 3 auf, die auf Gleisschienen 4 abrollen. Zwischen den Radsätzen 3 sind unterhalb des gerade durchgehenden Fahrgestellrahmens 2 je zwei übereinstimmende Fräsvorrichtungen 5 für die Gleisschienen 4 angeordnet. Diese Fräsvorrichtungen 5 weisen einen Fräskopf 6 auf, der in einer Fräskopfaufnahme 7 gelagert ist und über einen Motor 8 in an sich bekannter Weise angetrieben wird. Die Fräskopfaufnahme 7 bildet gemäß den Fig. 2 und 3 einen Querschlitten 9, der in einer in Bezug auf die Fahrrichtung 10 der Fräskopfaufnahme 7 vorgelagerten Führungsbahn 11 parallel zur Fräskopfwelle geführt wird. Die dem Motor 8 für den Fräskopfantrieb bezüglich der Fräskopfaufnahme gegenüberliegende Führungsbahn 11 für den Querschlitten 9 ist der Höhe nach über einen Anstellschlitten 12 verlagerbar, der in einer Führung 13 eines Gestells 14 verschiebbar gehalten wird. Die Stelltriebe für den Querschlitten 9 und den Anstellschlitten 12 sind aus Übersichtlichkeitsgründen nicht dargestellt und können beispielsweise aus hydraulischen Stellzylindern oder Spindeltrieben bestehen.

Zur Führung des Fräskopfs 6 gegenüber der zu bearbeitenden Lauffläche 15 der jeweiligen Gleisschiene 4 dient ein sich auf der noch nicht bearbeiteten Lauffläche 15 abstützender Führungsschuh 16, der gegenüber der Fräskopfaufnahme 7 der Höhe nach verstellbar gelagert ist, um die Schnitttiefe des Fräskopfs 6 einstellen zu können. Wie insbesondere der Fig. 2 entnommen werden kann, ist der schwenkbar gelagerte Führungsschuh 16 dem Fräskopf 6 in Fahrrichtung 10 unmittelbar vorgelagert, sodass sich für die Laufflächenbearbeitung durch den Fräskopf 6 eine vorteilhafte Kulissenführung durch die Lauffläche 15 selbst ergibt.

Neben der Höhenführung der Fräskopfaufnahme 7 über den Führungsschuh 16 ist die Fräskopfaufnahme 7 zusätzlich mit einem Führungsanschlag 17 zur Querführung versehen. Dieser Führungsanschlag 17 liegt unterhalb des Fräskopfs 6 am Schienenkopf 18 innenseitig an, sodass über die Beaufschlagung des Querschlittens 9 zur Anlage des Führungsanschlags 17 am Schienenkopf 18 der Fräskopf 6 genau entlang der Gleisschiene 4 bewegt werden kann. Zur Justierung des Führungsanschlags 17 dienen zwei Stelltriebe 19 innerhalb der Fräskopfaufnahme 7, die an einem Träger 20 für den Führungsanschlag 17 angreifen.

Die getroffenen Konstruktionsvoraussetzungen für die Fräsvorrichtung 5 ermöglichen den Einsatz von Fräsköpfen 6, deren Durchmesser kleiner als die Hälfte der Raddurchmesser der Radsätze 3 sind. Bei solchen Fräskopfdurchmessern ergeben sich in Verbindung mit den übrigen Konstruktionsvoraussetzungen einfache Bearbeitungsbedingungen für die Laufflächen 15 der Gleisschienen 4, weil einerseits die Fräsvorrichtungen 5 ohne Umbauanforderungen unmittelbar auf der Unterseite des Gestellrahmens 2 eines Schienenfahrzeugs 1 vorgesehen werden können und anderseits die gedrängte Bauweise vorteilhafte Voraussetzungen insbesondere für Gleisschienen 4 mit kleinen Kurvenradien schafft. Die Handhabung der Fräsvorrichtungen 5 ist einfach und erlaubt insbesondere einen raschen Wechsel des Fräskopfs 6. Der Fräskopf 6 braucht ja lediglich von der Fräskopfwelle abgezogen zu werden, was aufgrund des vergleichsweise geringen Gewichts des Fräskopfs 6 von Hand aus vorgenommen werden kann.

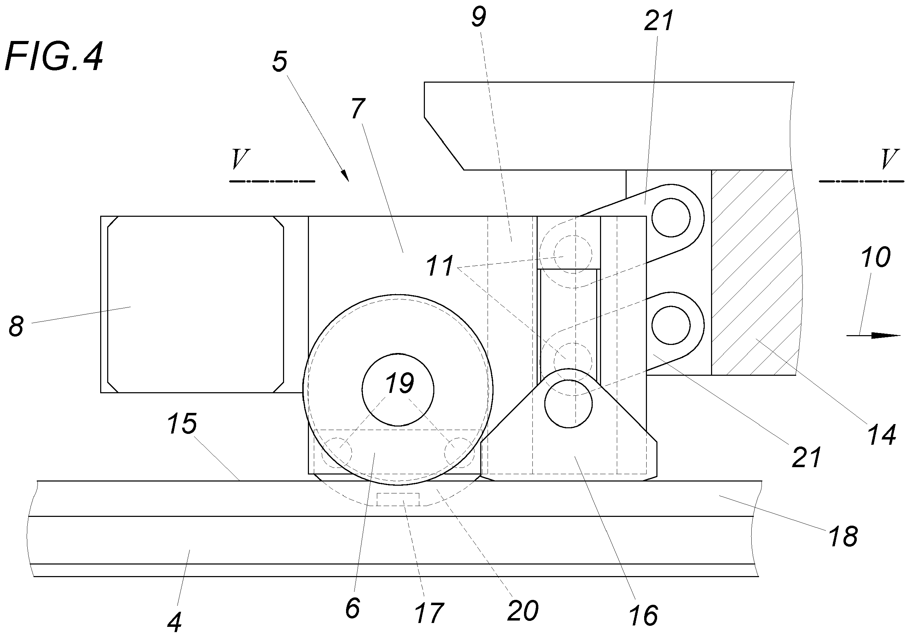

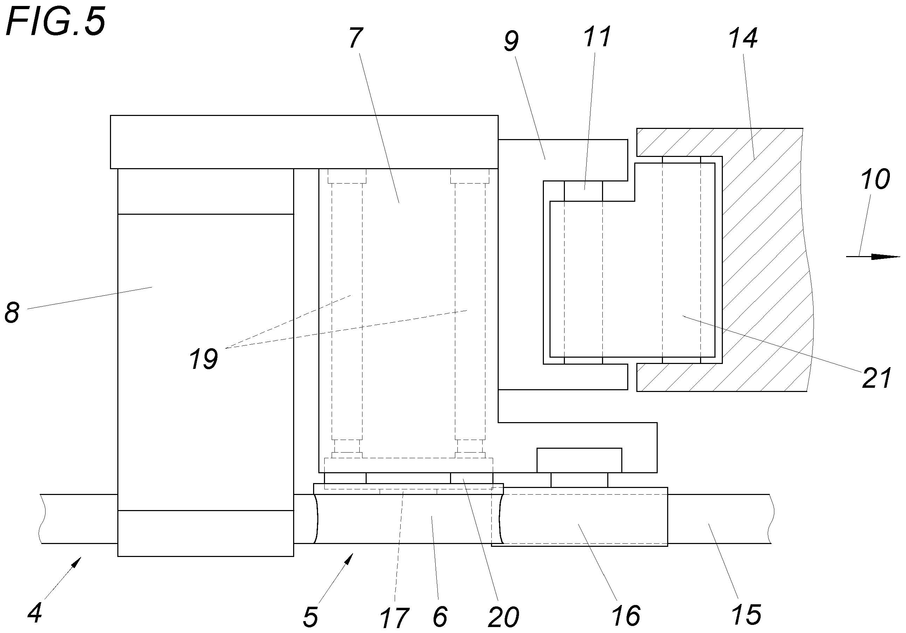

Die Ausführungsform nach den Fig. 4 und 5 unterscheidet sich von der Konstruktion nach den Fig. 2 und 3 im Wesentlichen nur dadurch, dass die Höhenführung für die Fräskopfaufnahme 7 nicht über einen Anstellschlitten 12, sondern über ein Gelenkparallelogramm 21 erfolgt. Die Führungsbahn 11 für den Querschlitten 9 der Fräskopfaufnahme 7 wird dabei in einfacher Weise durch die Anlenkachsen des Gelenkparallelogramms 21 am Querschlitten 9 erreicht, wie dies der Fig. 5 entnommen werden kann.

## Patentansprüche

1. Schienenfahrzeug (1) mit einer Fräsvorrichtung (5) zum Nachbearbeiten der Lauffläche (15) von Gleisschienen (4) während der Fahrt des einen Fahrgestellrahmen (2) mit Radsätzen (3) aufweisenden Schienenfahrzeugs (1) entlang der Gleisschienen (4), wobei die mit einem Fräskopf (6) versehene Fräsvorrichtung (5) ein am Fahrgestellrahmen (2) angeordnetes Gestell (14) mit einer der Höhe nach und quer dazu verlagerbaren Fräskopfaufnahme (7) umfasst, die zur Höhenführung über einen Führungsschuh (16) auf der Lauffläche (15) der Gleisschienen (4) und zur Querführung parallel zur Fräskopfwelle der Fräsvorrichtung (5) über einen Führungsanschlag (17) seitlich am Schienenkopf (18) der Gleisschienen (4) abstützbar ist, **dadurch gekennzeichnet, dass** die Fräskopfaufnahme (7) einen den Führungsschuh (16) und den Führungsanschlag (17) tragenden Querschlitten (9) bildet, dessen der Höhe nach am Gestell (14) verlagerbare Führungsbahn (11) auf der dem Führungsschuh (16) zugekehrten Seite der Fräskopfaufnahme (7) vorgesehen ist, und dass der Durchmesser des Fräskopfs (6) höchstens der Hälfte des Raddurchmessers der Radsätze (3) entspricht.

2. Schienenfahrzeug (1) nach Anspruch 1, **dadurch gekennzeichnet, dass** der Führungsschuh (16) unterhalb der Führungsbahn (11) des Querschlittens (9) angeordnet ist.

3. Schienenfahrzeug (1) nach Anspruch 1 oder 2, **dadurch gekennzeichnet, dass** der Motor (8) für den Fräskopfantrieb auf der der Führungsbahn (11) gegenüberliegenden Seite der Fräskopfaufnahme (7) angeordnet ist.

4. Schienenfahrzeug (1) nach einem der Ansprüche 1 bis 3, **dadurch gekennzeichnet, dass** die Höhenführung für die Fräskopfaufnahme (7) auf der Seite der Führungsbahn (11) für den Querschlitten (9) vorgesehen ist.

5. Schienenfahrzeug (1) nach einem der Ansprüche 1 bis 4, **dadurch gekennzeichnet, dass** zur Höhenführung des Querschlittens (9) ein im Gestell (14) der Höhe nach verschiebbar gelagerter Anstellschlitten (12) vorgesehen ist.

6. Schienenfahrzeug (1) nach einem der Ansprüche 1 bis 4, **dadurch gekennzeichnet, dass** der Querschlitten (9) zur Höhenführung über ein Gelenkparallelogramm (21) am Gestell (14) angelenkt ist.

7. Schienenfahrzeug (1) nach einem der Ansprüche 1 bis 6, **dadurch gekennzeichnet, dass** der Führungsanschlag (17) zur Querführung der Fräskopfaufnahme (7) unterhalb des Fräskopfs (6) an den Schienenkopf (18) anlegbar ist.

## Claims

1. Rail vehicle (1) comprising a milling device (5) for finishing the running surface (15) of track rails (4) during the travel of the rail vehicle (1), which has a chassis frame (2) having wheel sets (3), along the track rails (4), wherein the milling device (5), which is provided with a milling head (6), comprises a framework (14) arranged on the chassis frame (2) having a milling head receptacle (7) which is displaceable vertically and transversely with respect thereto and can be supported for the vertical guidance via a guide shoe (16) on the running surface (15) of the track rails (4) and for the transverse guidance in parallel with the milling head shaft of the milling device (5) via a guide stop (17) laterally on the rail head (18) of the track rails (4), **characterised in that** the milling head receptacle (7) forms a transverse carriage (9) which supports the guide shoe (16) and the guide stop (17) and the guide path (11) of which, which is vertically displaceable on the framework (14), is provided on the side of the milling head receptacle (7) facing towards the guide shoe (16), and **in that** the diameter of the milling head (6) corresponds at most to half of the wheel diameter of the wheel sets (3).

2. Rail vehicle (1) as claimed in claim 1, **characterised in that** the guide shoe (16) is arranged below the guide path (11) of the transverse carriage (9).

3. Rail vehicle (1) as claimed in claim 1 or 2, **characterised in that** the motor (8) for the milling head drive is arranged on the side of the milling head receptacle (7) opposite the guide path (11).

4. Rail vehicle (1) as claimed in any one of claims 1 to 3, **characterized in that** the vertical guidance for the milling head receptacle (7) is provided on the side of the guide path (11) for the transverse carriage (9).

5. Rail vehicle (1) as claimed in any one of claims 1 to 4, **characterised in that** a feed carriage (12), which is mounted so as to be vertically displaceable in the framework (14), is provided for the vertical guidance of the transverse carriage (9).

6. Rail vehicle (1) as claimed in any one of claims 1 to 4, **characterised in that** the transverse carriage (9) for the vertical guidance is linked to the framework (14) via an articulated parallelogram (21).

7. Rail vehicle (1) as claimed in any one of claims 1 to 6, **characterized in that** the guide stop (17) for the transverse guidance of the milling head receptacle (7) can be applied below the milling head (6) to the rail head (18).

## Revendications

1. Véhicule ferroviaire (1) comportant un dispositif de fraisage (5) pour le post-traitement de la surface de roulement (15) des voies ferrées (4) pendant le déplacement du véhicule ferroviaire (1) comportant un cadre de châssis (2) avec des jeux de roues (3) le long des voies ferrées (4), dans lequel le dispositif de fraisage (5) doté d'une tête de fraisage (6) comprend un châssis (14) disposé sur le cadre de châssis (2) avec un logement de tête de fraisage (7) déplaçable en hauteur et transversalement qui peut s'appuyer, pour le guidage en hauteur, par le biais d'un patin de guidage (16) sur la surface de roulement (15) des voies ferrées (4) et, pour le guidage transversal parallèlement à l'arbre de la tête de fraisage du dispositif de fraisage (5), par le biais d'une butée de guidage (17) latéralement sur champignon de rail (18) des voies ferrées (4), **caractérisé en ce que** le logement de tête de fraisage (7) forme un chariot transversal (9) portant le patin de guidage (16) et la butée de guidage (17), dont le rail de guidage (11) déplaçable en hauteur sur le châssis (14) est prévu sur la face du logement de tête de fraisage (7) opposée au patin de guidage (16), et que le diamètre de la tête de fraisage (6) correspond au maximum à la moitié du diamètre des roues des jeux de roues (3).

2. Véhicule ferroviaire (1) selon la revendication 1, **caractérisé en ce que** le patin de guidage (16) est disposé sous le rail de guidage (11) du chariot transversal (9).

3. Véhicule ferroviaire (1) selon la revendication 1 ou 2, **caractérisé en ce que** le moteur (8) entraînant la tête de fraisage est disposé sur le côté du logement de tête de fraisage (7) opposé au rail de guidage (11).

4. Véhicule ferroviaire (1) selon une des revendications 1 à 3, **caractérisé en ce que** le guidage en hauteur du logement de tête de fraisage (7) est prévu sur le côté du rail de guidage (11) du chariot transversal (9).

5. Véhicule ferroviaire (1) selon une des revendications 1 à 4, **caractérisé en ce que**, pour le guidage en hauteur du chariot transversal (9), il est prévu un chariot de réglage (12) coulissant en hauteur dans le châssis (14).

6. Véhicule ferroviaire (1) selon une des revendications 1 à 4, **caractérisé en ce que**, pour le guidage en hauteur, le chariot transversal (9) est articulé sur le châssis (14) par le biais d'un parallélogramme d'articulation (21).

7. Véhicule ferroviaire (1) selon une des revendications 1 à 6, **caractérisé en ce que** la butée de guidage (17) pour le guidage transversal du logement de tête de fraisage (7) peut être appliquée sur le champignon de rail (18) au-dessous de la tête de fraisage (6).
